# EUROPÄISCHE PATENTSCHRIFT

(11) **EP 2 665 205 B1**
(45) Veröffentlichungstag und Bekanntmachung des Hinweises auf die Patenterteilung: **30.06.2021**
(21) Anmeldenummer: 13002367.4
(22) Anmeldetag: 03.05.2013
(51) Int. Cl.: H04B 7/185, B64G 1/24, B64G 1/44

(54) **Multifunktionaler Kontroller für einen Satelliten mit Rekonfigurationsfunktionen eines Rechners an Bord und Abschalten von elektrischen Verbrauchern in einem Fehlerfall.**
Multifunctional controller for a satellite with reconfiguration functions for an on-board computer and disconnection of electrical consumers in case of a fault.
Contrôleur multifonctionnel pour un satellite ayant des fonctions de reconfiguration pour un calculateur à bord et déconnection de consommateurs électriques en cas de faute.

(30) Priorität: 14.05.2012 DE 102012009513
(43) Veröffentlichungstag der Anmeldung: 20.11.2013
(73) Patentinhaber: Airbus Defence and Space GmbH, 82024 Taufkirchen (DE)
(72) Erfinder: Eickhoff, Jens, D-88090 Immenstaad (DE)
(74) Vertreter: Frenkel, Matthias Alexander

(56) Entgegenhaltungen:
- EP-A1- 1 025 617
- US-A- 5 502 812
- US-A1- 2004 135 034
- US-A1- 2006 284 020
- None

## Beschreibung

Die Erfindung betrifft einen multifunktionalen Kontroller für einen Satelliten gemäß Anspruch 1.

In der Satellitentechnik werden Schlüsselkomponenten für Steuerung und Sicherheit an Bord eines Satelliten in der Regel redundant ausgeführt, um bei einem Ausfall eines Bauteils bzw. Komponente den Totalausfall des Satelliten zu vermeiden. Die internen Komponenten im Onboard Computer (OBC) und in der Power Control & Distribution Unit (PCDU) eines Satelliten sind daher insbesondere redundant ausgeführt, da ein Ausfall von Komponenten dieser Einheiten zu einem Totalausfall des Satelliten führen kann.

US 2006/0284020 A1 offenbart ein integriertes Leistungs- und Lagesteuersystem für ein Fahrzeug. Es liefert elektrischen Strom sowohl an Niederspannungs- als auch an Hochspannungsverbraucher und ist nicht auf relativ schwere Batterien angewiesen, um während des Fahrzeuginitialisierungsprozesses Strom zuzuführen. Das System umfasst ein Energiespeicherschwungrad und eine Solaranordnung, die zwischen einer verstauten Position und einer ausgefahrenen Position bewegbar ist. Das Energiespeicherschwungrad wird unter Verwendung von elektrischer Energie, die von einer Niederspannungsleistungsquelle geliefert wird, auf eine Drehgeschwindigkeit hochgeregelt, die ausreicht, um eine Lageregelung zu liefern. Dann, nachdem die Solaranordnung in ihre ausgefahrene Position bewegt worden ist, wird das Energiespeicherschwungrad unter Verwendung von elektrischer Energie, die von einer zweiten Energiequelle zugeführt wird, auf eine Rotationsgeschwindigkeit hochgeregelt, die ausreicht, um sowohl die Lageregelung als auch die Energiespeicherung bereitzustellen.

US 2004/0135034 A1 offenbart ein prognostisches Gesundheits- und Fehlermanagementsystem und, das den Gesundheitszustand und die Verschlechterungsrate eines oder mehrerer Schwungradsysteme genau bestimmt, indem tatsächliche und simulierte Antworten von Schwungradsystemen mit gelieferten Befehlssignalen verglichen werden. Basierend auf dem bestimmten Gesundheitszustand und der Verschlechterungsrate der Schwungradsysteme werden ein oder mehrere ungesunde aktive Schwungradsysteme deaktiviert, und ein oder mehrere gesunde, deaktivierte Schwungradsysteme aktiviert. Das System kann in terrestrischen Anwendungen oder in Fahrzeugen wie Satelliten, Raumfahrzeugen oder Schiffen verwendet werden.

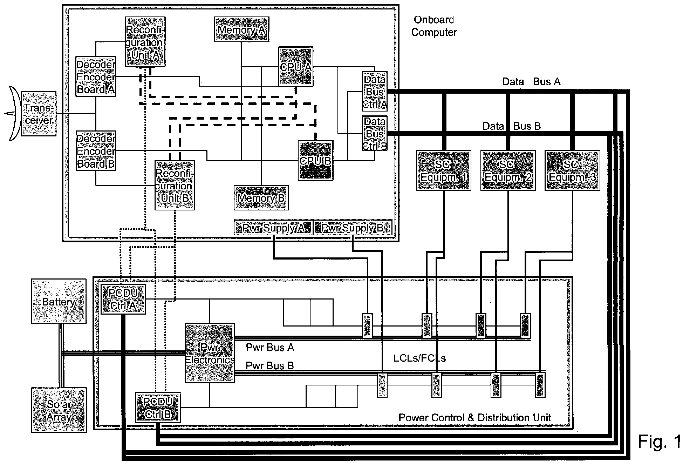

Der OBC steuert wichtige Funktionen des Satelliten und führt hierzu die Onboard Software (OBSW) aus. Die Kommandos dazu erhält er über Funk vom Boden über Antenne und Transceiver und ein Decoderboard, das die Digitalsignale vom Transceiver wieder in Datenpakete wandelt und an die OBSW auf der CPU des OBC weiterleitet- vgl. dazu auch Fig. 1. Die PCDU steuert die Versorgung der Komponenten des Satelliten mit elektrischer Energie vom Solarpanel und der Batterie des Satelliten. Um beispielsweise eine Nutzlast des Satelliten in Betrieb zu nehmen, steuert die OSBW einen Kontroller der PDCU an, der einen entsprechenden Schalter schließt, um die Nutzlast mit elektrischer Energie zu versorgen. Sobald die Nutzlast aktiviert ist, kann sie vom OBC gesteuert werden. Daten der Nutzlast können dann von der OSBW erfasst, ausgewertet und beispielsweise per Telemetrie zu einer Bodenstation übermittelt werden. Durch die redundante Auslegung wichtiger an einer derart komplexen Ablaufsteuerung beteiligter Komponenten soll ein Totalausfall des Satelliten aufgrund verschiedener Fehler wie beispielsweise Fehler auf Datenbussen, Softwarefehler oder Stromunterversorgung verhindert werden.

Zudem sind die PCDU und der OBC die Hochverfügbarkeitskomponenten an Bord jedes Satelliten. Die Stromregelung und Notabschaltungen von Geräten muss in jedem Fehlerfall funktionieren. Das automatische Versorgen des OBC mit Strom und das Booten des OBC muss auch nach einem Spannungsverlust im Satelliten sicher funktionieren, sobald der Satellit über die Solarpaneele in der Sonnenphhase des Orbits wieder genug Strom bekommt. Im OBC muss auch nach Softwareabsturz oder Hardwarefehler einer Komponente - z.B. CPU, Datenbuscontroller, Memoryboard - in jedem Fall möglich sein, auf die entsprechende, redundante Komponente umzuschalten.

Um diese Umschaltungen zu erlauben, sind auch jeweils alle internen OBC Baukomponenten kreuzweise verkabelt (sog. Kreuzkopplungen), sodass z.B. CPU A beide Data-Bus-Controller A und B bedienen kann und beide Memory Bausteine Memory-A und B- vgl. wieder Fig. 1. Analoges gilt für CPU B. Dasselbe Kreuzkopplungsprinzip gilt für die Elemente innerhalb der PCDU.

Für Notbetriebskommandierung vom Boden sind die beiden Schlüsselelemente innerhalb von OBC und PCDU die Reconfiguration Units und die PCDU Controller: Die Reconfiguration Units führen die Redundanzumschaltungen im OBC aus. Dazu müssen sie entsprechende Kommandos erhalten. Diese können von der OBSW kommen, wenn diese Fehler festgestellt hat, siehe dazu gestrichelte Leitungsverbindungen zwischen CPUs und Reconfiguration Units in Fig. 1. Im Fall einer abgestürzten OBSW oder einer defekten CPU können spezielle Rekonfigurationskommandos auch vom Boden über Transceiver und Decoderboards an die Reconfiguration Units gesendet werden. Über eine spezielle Unterbaugruppe der Reconfiguration Units, die sog. Command Pulse Decoding Unit (CPDU) können vom Boden auch Notkommandos an die PCDU Controller gesendet werden, um überflüssige Stromverbraucher notabzuschalten oder auch um andere Stromkreise zu aktivieren. Diese CPDU Kommandos (sog. High Priority Class1 oder HPC1 Kommandos) laufen über die in Fig. 1 punktiert dargestellten Verbindungen.

Auf diese Weise haben OBC und PCDU drei genormte Typen von Schnittstellen: Datenbusverbindungen, Stromverbindung von PCDU zum OBC und die genannten CPDU-Notkommandoleitungen vom OBC zur PCDU. Allerdings ist der Implementierungsaufwand der erforderlichen Funktionsaufteilung der an der Rekonfiguration beteiligten Komponenten hoch. Zudem steigt der Testaufwand, da jedes dieser Hochsicherheitsbauteile aufwendigen Tests unterzogen werden muss. Eine der vorliegenden Erfindung zugrunde liegende Aufgabe besteht daher darin, eine Lösung vorzuschlagen, die mit einem geringeren Aufwand implementiert werden kann.

Diese Aufgabe wird durch einen multifunktionalen Kontroller für einen Satelliten mit den Merkmalen von Anspruch 1 gelöst. Weitere Ausgestaltungen der Erfindung sind Gegenstand der abhängigen Ansprüche.

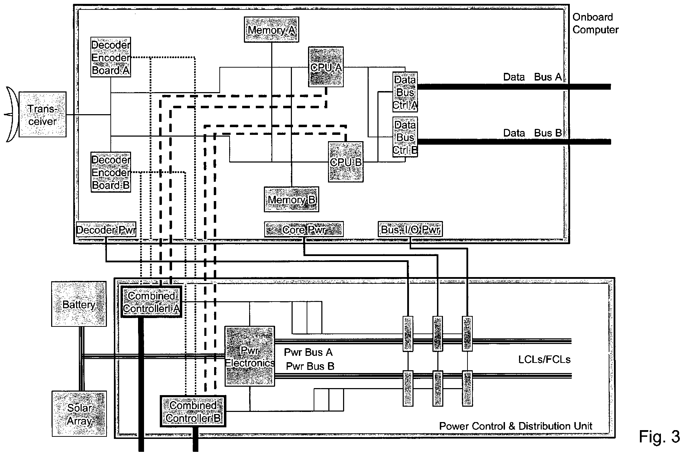

Der multifunktionale Kontroller gemäß der vorliegenden Erfindung kombiniert die zwei hochkritischen Komponenten, nämlich die Rekonfigurationseinheit und den PCDU Controller zum Steuern und Verteilen von Energie an Satellitenkomponenten in einem einzigen Chip, wodurch der Implementierungsaufwand für eine Satelliten-Steuer- und Sicherheitsvorrichtungen reduziert werden kann. Durch die Kombination dieser beiden Einheiten kann der in Fig. 3 als Combined Controller bezeichnete Baustein verschiedene Sicherungs- und Steuerfunktionen in der OBC/PCDU Architektur gemeinsam implementieren, insbesondere das Überwachen der Stromversorgung, das Ein- und Ausschalten der Stromversorgung von Satellitenkomponenten sowie das Umschalten zwischen redundanten Komponenten in PCDU und/oder OBC. Rekonfigurationen können weiterhin durch die OBSW oder den Boden via Decoderboards getriggert werden.

Der multifunktionale Kontroller kann insbesondere als ASIC (Application Specific Integrated Circuit) oder (F)PGA ((Field-)Programable Gate Array) implementiert werden. Der multifunktionale Kontroller erfordert in der Regel einen geringeren Design- und Testaufwand als eine aus Einzelkomponenten bestehende Lösung, wie sie in herkömmlichen Satelliten eingesetzt wird, da nur ein ASIC oder (F)PGA Baustein entwickelt werden muss bzw. nur eine Firmware für einen Mikrocontroller entwickelt werden muss. Entsprechend vermindert sich auch der Bauteiletestaufwand. Ferner können komplexe Systemtests für das Zusammenspiel der beiden im multifunktionalen Kontroller kombinierten Einheiten vereinfacht werden.

Eine Ausführungsform der Erfindung betrifft nun einen multifunktionalen Kontroller für einen Satelliten, der folgendes aufweist: eine Rekonfigurationseinheit bzw. Rekonfigurationsfunktionen zum Rekonfigurieren von Komponenten des Onboard-Computers und/oder Abschalten von elektrischen Verbrauchern des Satelliten in einem Fehlerfall, und eine Einheit zum Steuern und Verteilen von Energie an Satellitenkomponenten bzw. Steuerfunktionen zum Steuern der Verteilung von Energie an Satellitenkomponenten

Die Rekonfigurationsfunktionen können ferner ermöglichen, Power-Resets und/oder Soft-Reset-Kommandos zur Rekonfiguration von für Komponenten des Onboard-Computers zu erzeugen und an die entsprechenden Komponenten auszugeben. Soft-Resets werden hierbei insbesondere an die CPUs ausgegeben.

Der multifunktionale Kontroller kann - wie eine klassische Reconfiguration Unit - Eingänge zum Triggern von Rekonfigurationsfunktionen beim Empfangen entsprechender Befehle aufweisen. Beispielsweise können über diese Eingänge Triggersignale vom Onboard-Computer empfangen werden, über die der Onboard-Computer die Rekonfiguration bestimmter Module wie beispielsweise bei sporadischen Aussetzern eines Bus-Kontrollers anfordert oder das Umschalten auf ein redundantes Modul, wenn ein Modul fehlerhaft arbeitet, beispielsweise ein Speicher-Modul.

Weiterhin kann der Kontroller Eingänge für Überwachssignale vom Onboard-Computer aufweisen und implementiert haben, um beim Ausbleiben eines Überwachungssignals eine Rekonfiguration der entsprechenden Komponente des Onboard-Computers durchzuführen. Die Überwachungssignale können beispielsweise von Watchdog-Schaltungen stammen, die in Module und Komponenten des Onboard-Computers integriert sind und deren Funktion überwachen. Hierzu senden die Watchdog-Schaltungen bei fehlerfrei arbeitenden Modulen bzw. Komponenten Überwachungssignale aus. Wird von einer bestimmten Komponente kein zyklisches Überwachungssignal vom Kontroller empfangen, kann die Rekonfigurationseinheit die entsprechende Komponenten ermitteln und eine an diese Komponenten angepasste Rekonfiguration über ein entsprechendes Signal initiieren, das an die betroffenen Komponente ausgegeben wird.

Ferner kann der Kontroller Eingänge für Befehle von Dekoder-Modulen zur Hardware-Rekonfiguration des Onboard-Computers und/oder Notabschaltung von elektrischen Verbrauchern des Satelliten und/oder elektrische Umschaltungen aufweisen. Diese Eingänge können beispielsweise so ausgebildet sein, dass sie die erwähnten Befehle direkt an den Kontroller weiterleiten, der daraufhin beispielsweise eine Hardware-Rekonfiguration des Onboard-Computers auslöst und/oder die Einheit zum Steuern und Verteilen von Energie derart ansteuert, dass diese für entsprechende elektrische Verbraucher eine Notabschaltung durchführt, um die elektrische Energieversorgung um Satelliten zu schonen.

Schließlich kann in dem kombinierten Kontroller auch die klassische Funktion einer PCDU Steuerung zum Überwachen der Komponenten zur elektrischen Energieversorgung des Satelliten implementiert sein, um bei einer durch die Überwachung festgestellten Unterversorgung mit elektrischer Energie elektrische Komponenten des Satelliten abzuschalten und/oder nach einer derartigen Abschaltung bei einer durch die Überwachung festgestellten ausreichenden Versorgung mit elektrischer Energie sukzessive Komponenten des Satelliten mit elektrischer Energie zu versorgen. Hierzu kann der kombinierte Kontroller Eingänge zum Überwachen der Komponenten zur elektrischen Energieversorgung des Satelliten aufweisen und ausgebildet sein, um bei einer durch die Überwachung festgestellten Unterversorgung mit elektrischer Energie elektrische Komponenten des Satelliten abzuschalten und/oder nach einer derartigen Abschaltung bei einer durch die Überwachung festgestellten ausreichenden Versorgung mit elektrischer Energie sukzessive Komponenten des Satelliten mit elektrischer Energie zu versorgen. Beispielsweise können elektrische Spannungen von elektrischen Energiequellen wie einem Solarpanel und/oder einer Batterie des Satelliten überwacht werden. Wird durch die Überwachung festgestellt, dass die zur Verfügung stehende elektrische Energie nicht mehr zur Versorgung der Komponenten des Satelliten ausreicht, können einige oder alle Komponenten des Satelliten abgeschaltet werden. Nach einem Ausfall der Energieversorgung im Satelliten, beispielsweise wenn sich dieser im Erdschatten befindet und die Energie des Batterie nicht mehr zur Versorgung ausreicht, können bei Überschreiten einer bestimmten Spannungsschwelle, wenn der Satelliten beispielsweise wieder aus dem Erdschatten tritt, sukzessive Satelliten-Komponenten wieder in Betrieb genommen werden, vorzugsweise zuerst der Kontroller selbst, dann der Onboard-Computer, Satelliten-Lageregelungseinrichtungen etc.

Zu dieser Funktionalität eines klassischen PCDU Controllers nach Fig.1 - die ebenfalls in den kombinierten Kontroller integriert ist - gehört auch die Steuerung der elektrischen Energieversorgung und von deren Leistungselektronik in einem Satelliten zum Verteilen von elektrischer Energie auf einen oder mehrere Versorgungs-Busse und die Steuerung von den zugehörigen Leistungsschaltern zum von elektrischen Verbrauchern des Satelliten.

Der kombinierte Kontroller kann prinzipiell wahlweise in den OBC, in die PCDU oder sogar in ein separates Gehäuse integriert werden. Praktisch ist der Aufwand für die Verkabelung zwischen OBC und PCDU minimal, wenn die Integration in die PCDU erfolgt - weshalb dies in Fig. 3 auch so dargestellt ist. Diese Lösung ist aber nicht zwingend.

In einer konventionellen OBC/PCDU Architektur nach Fig. 1 laufen die Notabschaltkommandos vom Boden auf den punktiert gezeichneten Leitungen zwischen CPDU und PCDU auf analogen Verbindungen, da dies eine genormte Schnittstelle darstellt. Der kombinierte Kontroller ist ja ein rein digitaler Baustein und erlaubt daher die Notabschaltkommandos direkt als Telekommando-Pakete digital vom Decoderboard entgegen zu nehmen. Damit vereinfacht sich die Architektur noch etwas.

Eine weitere Ausführungsform der Erfindung betrifft ein Baukomponentenpaar aus OBC und PCDU zur Kommandierung eines Satelliten und der Steuerung seiner Energieversorgung mit

OBC Baukomponenten, insbesondere allen üblichen OBC Baukomponenten wie sie in herkömmlichen Architekturen zum Einsatz kommen, zur Steuerung von Satellitenequipment, zur Speicherung von Daten, zur Dekodierung von Telekommandos und zum Generieren von Telemetriedaten sowie zur internen Stromversorgung,

PCDU Baukomponenten, , insbesondere allen üblichen PCDU Baukomponenten wie sie in herkömmlichen Architekturen zum Einsatz kommen, insbesondere Eingangsleitungen vom Solarpaneel, Ein-/Ausgangsleitungen zur Batterie, einer PCDU Leistungselektronik zum Verteilen von elektrischer Energie auf einen oder mehrere Versorgungs-Busse und mit PCDU Leistungsschaltern zum An-/Ausschalten von elektrischen Verbrauchern des Satelliten an einen der Versorgungs-Busse, und

zwei redundanten multifunktionalen Kontrollern nach der Erfindung und wie hierin beschreiben mit Rekonfigurationsfunktionen zum Überwachen der korrekten Funktion von Komponenten eines Onboard-Computers des Satelliten und zum Umschalten zwischen redundanten Komponenten und/oder Rekonfigurieren von Komponenten des Onboard-Computers und/oder Abschalten von elektrischen Verbrauchern des Satelliten in einem Fehlerfall, und Steuerfunktionen zum Steuern der Stromverteilung an Satellitenkomponenten.

Schließlich betrifft eine Ausführungsform der Erfindung eine OBC/PCDU Kombination mit einem solchen kombinierten Kontroller, insbesondere für Kleinsatelliten, zum Steuern von Funktionen des Satelliten, zur Versorgung von elektrischen Verbrauchern des Satelliten mit elektrischer Energie, zum Steuern der elektrischen Energieversorgung in einem Satelliten und zum Überwachen des Satelliten-Onboard-Computers nach der Erfindung und wie vorstehend beschrieben.

Eine weitere Ausführungsform der Erfindung betrifft einen Satelliten, insbesondere Kleinsatellit, mit einem Transceiver zum Empfang von Signalen per Funk, einem Onboard-Computer zum Steuern von Funktionen des Satelliten, einem Solarpanel zur Versorgung von elektrischen Verbrauchern des Satelliten mit elektrischer Energie, einer Batterie zur Versorgung der elektrischen Verbraucher des Satelliten mit elektrischer Energie, und einer Vorrichtung zur Kommandierung eines Satelliten und der Steuerung seiner Energieversorgung nach der Erfindung und wie vorstehend beschrieben.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein Blockschaltbild von Systemkomponenten eines Satelliten mit konventioneller Architektur für OBC und PCDU;
Fig. 2 ein Blockschaltbild eines Ausführungsbeispiels eines multifunktionalen Kontrollers gemäß der Erfindung; und
Fig. 3 ein Blockschaltbild von Systemkomponenten eines Satelliten mit OBC und PCDU und einem multifunktionalen Kontroller (Combined Controller) gemäß der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

Der OBC und die PCDU sind Schlüsselkomponenten für die Steuerung und Sicherheit an Bord eines Satelliten. Daher sind in herkömmlichen Satelliten alle Baukomponenten innerhalb von OBC und PCDU jeweils redundant ausgeführt und kreuzgekoppelt. Fig. 1 zeigt ein Blockschaltbild von Systemkomponenten eines Satelliten inklusive OBC und PDCU mit redundanten Komponenten, die als A und B Version gekennzeichnet sind.

Innerhalb des OBC kann beispielsweise das Prozessormodul CPU A mit dem Speichermodul Memory A oder Memory B betrieben werden. In der Standardeinstellung werden in der Regel die A-Module genutzt. Von den Untermodulen im OBC sind in Fig. 1 nur exemplarisch die wichtigsten Typen aufgeführt; beispielsweise gibt es bereits mehrere Typen von Speichermodulen (PROM, RAM, Safeguard Memory usw.). Interne Uhren, Clock-Strobe-Verteiler etc. sind in Fig. 1 ebenfalls nicht dargestellt, unterliegen aber denselben Redundanzumschaltkonzepten.

Bei der nachfolgenden Beschreibung wird nun davon ausgegangen, dass nur die A-Module genutzt werden. Um z.B. eine Nutzlast wie zum Beispiel "Spacecraft Equipment 1" (SC Equipm. 1) in Betrieb zu nehmen, erhält der Satellit über einen Transceiver per Funk Kommandos, die im Decoder/Encoder Board A dekodiert werden und bei normalen Kommandos an die OBSW, die von der CPU A ausgeführt wird, auf dem Prozessorboard des OBC weitergereicht werden.

Die OBSW steuert über einen Data-Bus-Kontroller Bus Ctrl A und den vom Data-Bus-Kontroller kontrollierten Datenbus zunächst den aktiven PCDU-Kontroller PCDU Ctrl A des PCDU an, um die o.g. Nutzlast "Spacecraft Equipment 1" mit Strom vom Solar Array oder der Batterie zu versorgen. Der PCDU-Kontroller PCDU Ctrl A schließt entsprechend der Ansteuerung den LCL/FCL Schalter am jeweils aktiven Versorgungs-Bus Pwr Bus A, so dass SC Equipm. 1 vom Solar Array oder der Batterie über das das Leistungselektronik-Modul Power Electronics mit elektrischer Energie versorgt wird. Dann erst kann die Nutzlast SC Equipm. 1 selber vom OBC über den Bus-Kontroller Bus Ctrl A kommandiert werden. Telemetrie der Nutzlast liefert die OBSW wieder an den aktiven Encoder Decoder/Encoder Board A, um sie mittels des Transceivers zur Erde zu funken.

Im Folgenden werden nun die Funktionen der Decoder/Encoder-Module Decoder/Encoder Board A und B, der Rekonfigurationseinheiten Reconfi Unit A und B und der PCDU-Kontroller PDCU Ctrl A und B im Fehlerfall an Bord des Satelliten für verschiedene Fehlertypen beschrieben:
Fehlertyp 1: Fehler die die laufende OBSW des Satelliten identifizieren kann:
   In einem solchen Fehlerfall - wenn z.B. ein Bus-Kontroller Bus Ctrl A oder B sporadische Aussetzer zeigt, oder die OBSW von Memory-Chips EDAC-Fehlerbit-Meldungen erhält - sendet sie ein sogenanntes "High Priority Command" an die aktive Rekonfigurationseinheit Reconfiguration Unit A des OBC, die dann die Hardwareumschaltung - z.B. auf den Datenbus-Kontroller Data Bus Ctrl B oder das Speichermodul Memory B initiiert. Ggf. muss nach einer Hardware-Rekonfiguration die OBSW neu gebootet werden - ebenfalls veranlasst durch die Rekonfigurationseinheit Reconfiguration Unit A. Beim Fehlertyp 1 wird also eine Rekonfiguration durch die OBSW initiiert.
Fehlertyp 2: Absturz der OBSW - Autorekonfiguration:
   Im Fall des Absturzes der OBSW muss mindestens die aktive CPU ein Reset-Kommando erhalten, um neu zu booten, oder im Fall eines OBSW Absturzes durch Hardwarefehler die entsprechende Komponente des OBC auf die B-Seite umkonfiguriert werden (Memory, CPU....). Zusätzlich wird bei abgestürzter OBSW die Lage des Satelliten und die Ausrichtung des Solarpanels zur Sonne nicht mehr gesteuert, sodass schnellstens überflüssige Verbraucher (z.B. laufende Nutzlasten) abgeschaltet werden müssen. Aufgrund der nicht laufenden OBSW kann diese die Abschaltung aber nicht über die Datenbus-Kontroller Data Bus Ctrl A oder B und den Datenbus kommandieren.
   Die Rekonfigurationseinheit Reconfiguration Unit A überwacht daher zyklisch über bestimmte Watchdog-Leitungen, ob die aktive CPU des Rechners (und ggf. weitere Baukomponenten, die mit Watchdog-Schaltungen ausgestattet sind) noch korrekt laufen. Bei einem Ausbleiben eines Watchdog-Signals können bestimmte Rekonfigurationen automatisch durchgeführt werden. Der Umfang ist aber in der Regel limitiert, da mit einfachen Mitteln an Bord eine detaillierte Fehlerursachenuntersuchung nicht möglich ist. Komplexere Situationen erfordern daher eine Rekonfiguration vom Boden aus (siehe Fehlertyp 3). Beim Fehlertyp 2 wird daher eine selbstständige Rekonfiguration (Autorekonfiguration) an Bord, d.h. ohne äußere Signalisierung durchgeführt.
Fehlertyp 3: Absturz der OBSW - Rekonfiguration vom Boden:
   Beide Aufgaben - OBC Rekonfiguration und Notabschaltung von Verbrauchern - müssen in diesem Fall vom Boden erfolgen. Dafür gibt es spezielle "High Priority Commands" vom Boden, die vom Decoder/Encoder-Module Decoder/Encoder Board A und B erkannt werden und nicht an die CPU des Rechners, sondern an die aktive Rekonfigurationseinheit Reconfiguration Unit A oder B weitergeleitet werden. Damit wird die Hardware-Rekonfiguration im OBC ausgelöst, ggf. ein Reboot der OBSW initiiert, und über eine spezielle Untereinheit der Rekonfigurationseinheit, die sogenannte "Command Pulse Decoding Unit" (CPDU), werden speziell formatierte analoge Pulskommandos direkt über gesonderte Leitungen an die PCDU-Kontroller gesendet, mit denen die Notabschaltung von Verbrauchern und ggf. weitere elektrische Umschaltungen durchgeführt werden können. Beim Fehlertyp 3 wird also eine Rekonfiguration vom Boden, d.h. durch äußere Signalisierung mittels speziellen Kommandos initiiert.
Fehlertyp 4: Stromunterversorgung im Satelliten:
   Im Fall einer Unterversorgung des Satelliten mit Strom, beispielsweise wenn sich der Satellit im Erdschatten befindet und die Batterie keine ausreichende elektrische Energie zur Versorgung des Satelliten aufweist, wird im Notfall vom aktiven PCDU-Kontroller der gesamte Satellit abgeschaltet, inklusive OBC. Kommt der Satellit dann wieder aus dem Erdschatten, und die Eingangsspannung von Solar Array und Batterie an der PCDU steigt wieder, aktiviert sich automatisch der letzte aktive PCDU-Kontroller selbst und schaltet mit weiter steigender Systemspannung sukzessive weitere Satellitenkomponenten an - zuerst den OBC. Dieser steuert mit seiner OBSW dann das Hochfahren der weiteren Satellitenkomponenten, z.B. des Lageregelungsequipment usw., bis zum Erreichen einer Safe-Mode-Konfiguration. Der OBC wird gebootet entsprechend den Einstellungen seiner Rekonfigurationseinheit. Auch hier spielen PCDU-Kontroller und Rekonfigurationseinheit wieder zusammen. Beim Fehlertyp 4 wird demnach ein Reboot und eine Rekonfiguration des OBC vom PCDU-Kontroller initiiert.

Aus der vorangehenden Beschreibung wird deutlich, dass die beiden Komponententypen, die Rekonfigurationseinheiten des OBC und die PCDU-Kontroller, extrem kritische Bauelemente in Bezug auf die korrekte Funktion und die Rekonfiguration des Satelliten im Fehlerfall sind. Vom 100%igen Funktionieren dieser beiden Komponenten hängt im Fehlerfall die Satellitenmission ab. Beide Komponententypen werden daher in Satelliten meist ohne eigene Software als FPGA- oder direkt als ASIC-Bausteine implementiert. Dadurch ist allerdings ein großer Testaufwand für zwei unabhängige Bausteine und zusätzlich für Systemtests für deren reibungsloses Zusammenspiel in allen Situationen - erforderlich.

Um den Implementierungs- und Testaufwand zu verringern, können diese beiden Komponenten zu einer einzigen Komponente, einem multifunktionalen Kontroller zusammengefasst werden, der eine Implementierung einer OBC-Rekonfigurationseinheit und eines PCDU-Kontrollers kombiniert. Der so geschaffene multifunktionale Kontroller kann im PCDU-Gehäuse oder im OBC-Gehäuse verbaut werden, in einem separaten Gehäuse, oder beide Einheiten (OBC und PCDU) werden mit dem multifunktionalen Kontroller zu einem gemeinsamen Gerät in einem Gehäuse kombiniert.

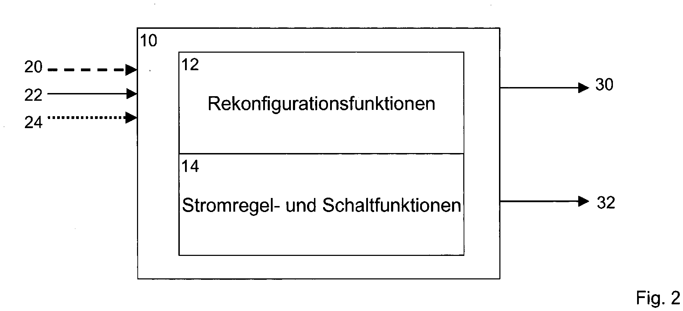

Fig. 2 zeigt ein Blockschaltbild eines solchen multifunktionalen Kontrollers 10, Rekonfigurationsfunktionen 12 und Stromregel- und Schaltfunktionen 14 aufweist, die beide im selben Chip oder auf demselben Microkontroller implementiert sind und auf gemeinsame Daten und Parameter zurückgreifen können. Der multifunktionale Kontroller weist für die Rekonfigurationsfunktionen 12 mehrere Eingänge 20, 22 und 24 auf.

Eingänge 20 sind zum Triggern von Rekonfigurationsfunktionen beim Empfangen entsprechender Befehle wie den "High Priority Commands" (siehe Fehlertyp 1 oben) vorgesehen und dienen dazu, dass die Rekonfigurationsfunktionen 12 über den Reset-Ausgang 30 einen Reset einer oder mehrerer OBC-Komponenten initiiere und ggf. zusätzlich über die Stromschaltfunktionen eine Hardware-Umschaltung auf redundante OBC-Komponenten.

Eingänge 22 sind für Überwachssignale vom OBC wie Watchdog-Signalen (siehe Fehlertyp 2 oben) vorgesehen und dienen dazu, um beim Ausbleiben eines Überwachungssignals eine Rekonfiguration der entsprechenden Komponente des OBC durch Ausgabe entsprechender Signale den Ausgängen 30 und 32 durchzuführen.

Eingänge 24 sind für Befehle von Dekoder-Modulen zur Hardware-Rekonfiguration des OCB und/oder Notabschaltung von elektrischen Verbrauchern des Satelliten und/oder elektrische Umschaltungen wie die speziellen "High Priority Commands" vom Boden (siehe Fehlertyp 3 oben) vorgesehen und dienen dazu, um eine Hardware-Rekonfiguration von OBC Komponenten auszulösen bzw. einen Reboot der OBSW zu initiieren, durch Ausgabe entsprechender Signale den Ausgängen 30 und 32. Desweiteren können duch Eingaben auf den Eingängen 24 über die Stromschaltfunktionen 14 eine Notabschaltung von Verbrauchern und ggf. weitere elektrische Umschaltungen durch Ausgabe entsprechender Steuersignale am Ausgang 32 durchgeführt werden. Hierbei müssen die Befehle auf den Eingänden 24 nicht mehr als analoge Pulskommandos implementiert sein, wie es bei einer Ausführung mit der Rekonfigurationseinheit und dem PCDU-Kontroller als eigenständige Bauelemente normalerweise erforderlich ist. Die Signaltypen auf den Eingängen 24 kann direkt in digitaler Form vom Dekoderboard an den multifunktionalen Kontroller weitergeleitet werden.

Die Stromregel- und Schaltfunktionen übernehmen auch die klassische PCDU Funktion der Überwachung der elektrischen Energieversorgung des Satelliten vorgesehen (siehe Fehlertyp 4 oben) und dienen dazu, um durch Ausgabe entsprechender Steuersignale am Ausgang 32 Komponenten des Satelliten bei nicht ausreichender elektrischer Energie abzuschalten und/oder sukzessive Komponenten des Satelliten mit elektrischer Energie zu versorgen, sobald eine ausreichende elektrische Energieversorgung im Satelliten vorherrscht (beispielsweise wenn nach einem Totalausfall der elektrischen Energieversorgung im Erdschatten das Solarpaneel wieder ausreichend elektrische Energie liefert).

Fig. 3 zeigt ein Blockschaltbild von Systemkomponenten eines Satelliten mit OBC und PCDU und dem erfindungsgemäßen multifunktionalen Kontroller, der in Fig, 3 mit Combined Controller A und Combined Controller B bezeichnet ist. Im Unterschied zu der in Fig. 1 gezeigten Architektur sind bei der in Fig. 3 gezeigten Architektur in die multifunktionalen Kontroller Combined Controller A und B die Rekonfigurationseinheiten aus dem OBC und die PCDU Ctrl Einheiten aus der PCDU von Fig. 1 implementiert, was sich in einem einfacheren Aufbau zeigt.

Im Normalbetrieb kann auch bei der Architektur von Fig. 3 die OBSW des Rechners über die mit den Datenbus-Kontrollern Data Bus Ctrl A und B verbundenen Datenbusse weiterhin die in den multifunktionalen Kontrollern Combined Controller A und Combined Controller B implementierten PCDU Steuerfunktionen kommandieren (der Übersichtlichkeit halber sind die Verbindungen in Fig. 3 nicht gezeigt, ebenso wie die Datenbusverbindung zu weiterem Satellitenequipment).

Die OBC Rekonfiguration erfolgt wie im konventionellen Fall durch Power-Resets oder Soft-Reset-Kommandos an die entsprechenden OBC Unterbauteile - jetzt von den multifunktionalen Combined Controllern .

Beispielsweise kann von den Combined Controllern separat jedes OBC Decoderboard A oder B mit Strom versorgt werden, jedes OBC Core Board A bzw. B jeweils mit CPU, PROM, RAM, Clockmodul, Datenbus oder/und jedes I/O Modul A oder B usw. Der hier scheinbar zusätzlich entstehende elektrische Schaltungsaufwand in der PCDU war in der Architektur des OBC aus Fig. 1 jeweils in dessen Rekonfigurationseinheiten versteckt und ist damit kein zusätzlicher Aufwand, wenn die Gesamtarchitektur aus OBC plus PCDU betrachtet wird.

Die Funktion der multifunktionalen Kontroller in den verschiedenen oben erläuterten Fehlerfällen ist nun wie folgt:
- Im Fehlerfall vom Typ 1 triggert die laufende OBC OBSW in einer CPU über entsprechende Verbindungen - in Fig. 2 wieder gestrichelt dargestellt - die Rekonfigurationsfunktionen im aktiven multifunktionalen Kontroller, beispielsweise Combined Controller A. Hierzu gehen die Verbindungen vom OBC in die Rekonfigurations-Triggereingänge 20 der beiden multifunktionalen Kontroller.
- Im Fehlerfall vom Typ 2 erfolgt die Autorekonfiguration unverändert, lediglich durch den aktiven multifunktionalen Kontroller, z.B. Combined Controller A. Die Watchdog-Leitungen, die bisher im OBC zu den Rekonfigurationseinheiten verliefen, gehen jetzt zu den Eingängen 22 der multifunktionalen Kontroller.
- Im Fehlerfall vom Typ 3 triggern die Dekoderboards Decoder/Encoder Board A und B über Verbindungen jetzt die Rekonfigurationsfunktionen im aktiven multifunktionalen Kontroller, beispielsweise Combined Controller A. Hierzu gehen die Verbindungen von den Dekoderboards Decoder/Encoder Board A und B in die Hardware-Rekonfiguration - und Notabschaltungs-Befehlseingänge 24 der beiden multifunktionalen Kontroller - in Fig. 2 wieder punktiert dargestellt.
- Im Fehlerfall vom Typ 4 (Unterversorgung mit Energie) steuern nach wie vor die PCDU Steuerfunktionen der multifunktionalen Kontroller den Reboot des Satelliten - unverändert zur klassischen Architektur. Als zusätzliche Funktion überwachen die multifunktionalen Kontroller noch über die Leistungselektronik Pwr Electronics die elektrische Energieversorgung durch das Solarpanel und die Batterie des Satelliten sowie die Spannungsregelung auf den Stromschienen Pwr Bus A und B. Bei einer Unterversorgung schalten diese Steuerfunktionen einzelne Komponenten ab.

Im Folgenden sind noch einmal einige Vorteile, die das erfindungsgemäße Konzept der Zusammenlegung von OBC-Rekonfigurationseinheit und der PCDU-Kontroller bietet, kurz aufgelistet:
- Es muss nur noch ein kritischer Kontrollerbaustein beispielsweise als Chip (FPGA oder ASIC) hergestellt werden.
- Es muss nur noch eine Chip-Firmware (bzw. ein Chip IP-Core) implementiert werden.
- Es müssen nur noch an einem Baustein aufwändige Tests durchgeführt werden.
- Alle Funktionen können - da in einer Firmware und auf einem Chip - auch direkt zusammen ausgetestet werden. Dafür wird nur eine Firmware-Entwicklungs/Testumgebung benötigt und der Chip selber. Es müssen für Systemtests nicht mehrere Baukomponenten (separater OBC und PCDU) miteinander verkabelt werden. Komplexe Systemtests für das Zusammenspiel einer klassischen OBC-Rekonfigurationseinheit und den PCDU-Kontrollern für diverse Fehlerfälle wie Failure Detection, Isolation and Recovery FDIR werden vereinfacht. Einige Spezialfälle können sogar ganz entfallen.
- Für das OBSW (Onboard Software)-Design ergeben sich nur minimale Änderungen zum Triggern der Rekonfigurationen gegenüber der klassischen Architektur -> kein Zusatzaufwand.
- Die Decoder/Encoderboards bleiben auch bis auf die Verkabelungen identisch zur klassischen Architektur.
- Die analoge CPDU als Untereinheit der Rekonfigurationseinheit, mit der analoge Schaltkommandos an den PCDU Controller gesendet werden, kann komplett entfallen. Die entsprechenden Klasse HPC1 Notfallkommandos werden nach der Decodierung über die normale, digitale Verbindung zum Combined Controller gesendet. Das CPDU Gegenstück im PCDU Controller, die analoge LCL Schaltelektronik in der PCDU entfällt ebenfalls.
- Diese Vereinfachungen reduzieren die Herstell- und Verifikationskosten für das Tandem OBC+PCDU signifikant, was die Architektur besonders interessant für Low-Cost Missionen macht.

### BEZUGSZEICHEN UND AKRONYME

- 10: multifunktionaler Kontroller
- 12: Rekonfigurationsfunktionen
- 14: Stromregel- und Schaltfunktionen
- 20: Rekonfigurations-Triggereingänge
- 22: Watchdog-Eingänge
- 24: Hardware-Rekonfiguration- und Notabschaltungs-Befehlseingänge
- 30: Reset-Ausgänge
- 32: Energieversorgungs-Steuersignale

- ASIC: Application Specific Integrated Circuit
- CPDU: Command Pulse Decoding Unit
- CPU: Central Processing Unit
- FDIR: Failure Detection, Isolation and Recovery
- (F)PGA: (Field-)Programable Gate Array
- OBC: Onboard Computer
- OBSW: Onboard Software
- PCDU: Power Control & Distribution Unit
- PROM: Programable Read Only Memory
- RAM: Random Access Memory
- SC: Spacecraft

## Patentansprüche

1. Multifunktionaler Kontroller (10A, 10B) für einen Satelliten, der folgendes aufweist:
- Rekonfigurationsfunktionen (12) zum Rekonfigurieren von Komponenten eines Onboard-Computers, OBC, des Satelliten in einem Fehlerfall, wobei die Komponenten des OBC Central Processing Units, CPUs, beinhalten,
- Steuerfunktionen (14) zum Steuern der Verteilung von Energie an Satellitenkomponenten,
- wobei die Rekonfigurationsfunktionen (12) und die Steuerfunktionen (14) gemeinsam in einem einzigen Chip implementiert sind,
**dadurch gekennzeichnet, dass**
der Chip in einem separaten Gehäuse integriert und von den CPUs durch das Gehäuse separiert ist.

2. Kontroller nach Anspruch 1, **dadurch gekennzeichnet, dass** die Rekonfigurationsfunktionen ermöglichen, Power-Resets (32) und/oder Soft-Reset-Kommandos (30) zur Rekonfiguration von Komponenten des Onboard-Computers zu erzeugen und an die entsprechenden Komponenten auszugeben.

3. Kontroller nach Anspruch 1 oder 2, **dadurch gekennzeichnet, dass** er Eingänge (20) zum Triggern von Rekonfigurationsfunktionen beim Empfangen entsprechender Befehle aufweist.

4. Kontroller nach Anspruch 1, 2 oder 3, **dadurch gekennzeichnet, dass** er Eingänge (22) für Überwachssignale vom Onboard-Computer aufweist und implementiert hat, um beim Ausbleiben eines Überwachungssignals eine Rekonfiguration der entsprechenden Komponente des Onboard-Computers durchzuführen.

5. Kontroller nach Anspruch 1, 2, 3 oder 4, **dadurch gekennzeichnet, dass** er Eingänge (24) für Befehle von Dekoder-Modulen zur Hardware-Rekonfiguration des Onboard-Computers und/oder Notabschaltung von elektrischen Verbrauchern des Satelliten aufweist.

6. Baukomponentenpaar aus Onboard-Computer, OBC, und Power Control and Distribution Unit, PCDU, zur Kommandierung eines Satelliten und der Steuerung seiner Energieversorgung mit
- OBC Baukomponenten zur Steuerung von Satellitenequipment, zur Speicherung von Daten, zur Dekodierung von Telekommandos und zum Generieren von Telemetriedaten sowie zur internen Stromversorgung,
- PCDU Baukomponenten, insbesondere Eingangsleitungen vom Solarpaneel, Ein-/Ausgangsleitungen zur Batterie, einer PCDU Leistungselektronik zum Verteilen von elektrischer Energie auf einen oder mehrere Versorgungs-Busse und mit PCDU Leistungsschaltern zum An-/Ausschalten von elektrischen Verbrauchern des Satelliten an einen der Versorgungs-Busse, und
- zwei redundanten multifunktionalen Kontrollern nach einem der vorhergehenden Ansprüche 1 bis 5 mit Rekonfigurationsfunktionen (12) zum Überwachen der korrekten Funktion von Komponenten eines Onboard-Computers des Satelliten und zum Umschalten zwischen redundanten Komponenten und/oder Rekonfigurieren von Komponenten des Onboard-Computers des Satelliten in einem Fehlerfall, und Steuerfunktionen (14) zum Steuern der Stromverteilung an Satellitenkomponenten.

7. Satellit, insbesondere Kleinsatellit, mit
- einem Transceiver zum Empfang von Signalen per Funk,
- einem Onboard-Computer zum Steuern von Funktionen des Satelliten,
- einem Solarpanel zur Versorgung von elektrischen Verbrauchern des Satelliten mit elektrischer Energie,
- einer Batterie zur Versorgung der elektrischen Verbraucher des Satelliten mit elektrischer Energie, und
- einer Vorrichtung nach Anspruch 6 zur Kommandierung eines Satelliten und der Steuerung seiner Energieversorgung.

## Claims

1. A multifunctional controller (10A, 10B) for a satellite, comprising:
- reconfiguration functions (12) for reconfiguring components of an onboard computer, OBC, of the satellite in an event of a mal-function, wherein the components of the OBC include central processing units, CPUs;
- control functions (14) for controlling a distribution of energy to satellite components,
- wherein the reconfiguration functions (12) and the control functions (14) are implemented together in a single chip,
**characterized in that**
the chip is integrated in a separate housing and separated from the CPUs by the housing.

2. Controller according to claim 1, **characterized in that** the reconfiguration functions enable power resets (32) and/or soft reset commands (30) to be performed for reconfiguring components of the onboard computer and to be issued to the corresponding components.

3. Controller according to claim 1 or 2, **characterized in that** it comprises inputs (20) for triggering reconfiguration functions upon receiving corresponding commands.

4. Controller according to claim 1, 2 or 3, **characterized in that** it has inputs (22) for monitoring signals from the onboard computer and implemented to perform reconfiguration of the corresponding component of the onboard computer in the absence of a monitoring signal.

5. Controller according to claim 1, 2, 3 or 4, **characterized in that** it comprises inputs (24) for commands from decoder modules for hardware reconfiguration of the onboard computer and/or emergency shutdown of electrical loads of the satellite.

6. Pair of components consisting of an onboard computer, OBC, and a power control and distribution unit, PCDU, for commanding a satellite and controlling its energy supply with
- OBC building components to control satellite equipment, store data, decode tele-commands and generate telemetry data, and provide internal power,
- PCDU building components, in particular input lines from the solar panel, input/output lines to the battery, PCDU power electronics for distributing electrical energy to one or more supply buses and with PCDU power switches for turning on/off electrical loads of the satellite at one of the supply buses,
and
- two redundant multifunctional controllers according to any of the preceding claims 1 to 5, comprising reconfiguration functions (12) for monitoring the correct operation of components of an onboard computer of the satellite and for switching between redundant components and/or reconfiguring components of the onboard computer of the satellite in the event of a malfunction, and control functions (14) for controlling power distribution to satellite components.

7. Satellite, especially small satellite, with
- a transceiver for receiving signals by radio,
- an onboard computer to control functions of the satellite,
- a solar panel to supply electrical energy to electrical consumers of the satellite,
- a battery to supply the electrical consumers of the satellite with electrical energy, and
- a device according to claim 6 for commanding a satellite and controlling its power supply.

## Revendications

1. Contrôleur multifonctionnel (10A, 10B) pour un satellite, comprenant :
- des fonctions de reconfiguration (12) pour reconfigurer des composants d'un ordinateur de bord, OBC, du satellite en cas de défaut, les composants de l'OBC comprenant des unités centrales de traitement, CPU,
- des fonctions de commande (14) pour commander la distribution d'énergie à des composants de satellite,
- dans lequel les fonctions de reconfiguration (12) et les fonctions de commande (14) sont implémentées ensemble dans une seule puce,
**caractérisé en ce que**
la puce est intégrée dans un boîtier séparé et est séparée des CPU par ledit boîtier.

2. Contrôleur selon la revendication 1, **caractérisé en ce que** les fonctions de reconfiguration permettent de générer des ordres de réinitialisation d'alimentation (32) et/ou de réinitialisation de logiciel (30) pour reconfigurer des composants de l'ordinateur de bord et de distribuer ces ordres aux composants correspondants.

3. Contrôleur selon la revendication 1 ou 2, **caractérisé en ce qu'**il comprend des entrées (20) pour déclencher des fonctions de reconfiguration à la réception d'instructions correspondantes.

4. Contrôleur selon la revendication 1, 2 ou 3, **caractérisé en ce qu'**il comprend des entrées (22) pour des signaux de surveillance de l'ordinateur de bord et les a implémentées pour effectuer, en l'absence du signal de surveillance, une reconfiguration du composant correspondant de l'ordinateur de bord.

5. Contrôleur selon la revendication 1, 2, 3 ou 4, **caractérisé en ce qu'**il comprend des entrées (24) pour des instructions de modules décodeurs en vue d'une reconfiguration matérielle de l'ordinateur de bord et/ou d'un arrêt d'urgence de consommateurs électriques du satellite.

6. Paire de composants constituée d'un ordinateur de bord, OBC, et d'une unité de commande et de distribution d'énergie, PCDU, pour donner des ordres à un satellite et commander son alimentation en énergie, comprenant
- des composants d'OBC pour commander un équipement de satellite, pour stocker des données, pour décoder des ordres à distance et pour générer des données de télémétrie ainsi que pour l'alimentation en énergie interne,
- des composants de PCDU, en particulier des lignes d'entrée provenant du panneau solaire, des lignes d'entrée/sortie vers la batterie, une électronique de puissance de PCDU pour distribuer de l'énergie électrique à un ou plusieurs bus d'alimentation et avec des commutateurs de puissance de PCDU pour mettre en marche/arrêter des consommateurs électriques du satellite sur l'un des bus d'alimentation, et
- deux contrôleurs multifonctionnels redondants selon l'une des revendications précédentes 1 à 5, comprenant des fonctions de reconfiguration (12) pour surveiller le bon fonctionnement de composants d'un ordinateur de bord du satellite et pour commuter entre des composants redondants et/ou reconfigurer des composants de l'ordinateur de bord du satellite en cas de défaut, et des fonctions de commande (14) pour commander la distribution d'énergie aux composants du satellite.

7. Satellite, en particulier petit satellite, comprenant
- un émetteur-récepteur pour recevoir des signaux par radio,
- un ordinateur de bord pour commander des fonctions du satellite,
- un panneau solaire pour alimenter des consommateurs électriques du satellite en énergie électrique,
- une batterie pour alimenter les consommateurs électriques du satellite en énergie électrique et
- un dispositif selon la revendication 6 pour donner des ordres à un satellite et commander son alimentation en énergie.
